# EUROPÄISCHE PATENTSCHRIFT

(11) **EP 2 163 814 B1**
(45) Veröffentlichungstag und Bekanntmachung des Hinweises auf die Patenterteilung: **11.03.2020**
(21) Anmeldenummer: 08164398.3
(22) Anmeldetag: 16.09.2008
(51) Int. Cl.: F21S 41/37, B29C 45/14, B29L 11/00

(54) **Reflektor für eine Beleuchtungsvorrichtung eines Kraftfahrzeugs**
Reflector for a lighting device for a motor vehicle
Réflecteur pour un dispositif d'éclairage d'un véhicule automobile

(43) Veröffentlichungstag der Anmeldung: 17.03.2010
(73) Patentinhaber: HELLA GmbH & Co. KGaA, 59552 Lippstadt (DE)
(72) Erfinder: Rotgeri, Gerhard, 59590 Geseke, Deutschland (DE); Döring, Berthold, 59457, Werl-Büderich (DE)

(56) Entgegenhaltungen:
- EP-A- 1 409 922
- DE-A1- 2 038 775
- DE-A1- 19 811 055
- DE-A1-102006 051 774
- DE-T2- 69 817 490
- FR-A- 2 795 672
- US-A1- 2004 072 006
- US-A1- 2007 023 961

## Beschreibung

Die Erfindung betrifft einen Reflektor für eine Beleuchtungsvorrichtung eines Kraftfahrzeugs nach dem Oberbegriff des Patentanspruchs 1

Es ist allgemein bekannt, Metallreflektoren für Kraftfahrzeugleuchten aus Blech zu formen oder mittels Druckgussverfahren herzustellen. Zur Erzeugung einer glatten Oberfläche wird die Innenseite des Metallreflektors mit einem glättenden Lack überzogen. Zur Bildung der Reflexionsfläche wird die so gebildete Lackschicht abschließend bedampft.

Aus der nachveröffentlichten deutschen Patentanmeldung 10 2007 017 079.5 ist ferner bekannt, dass ein Reflektor für Fahrzeugleuchten einen die Reflektorfläche tragenden metallischen Grundkörper aufweist, an den auf einer Rückseite mittels Spritzgießens eine Mehrzahl von Anbindungselementen angespritzt wird. Die Anbindungselemente sind aus einem Kunststoffmaterial ausgeführt und dienen der Verbindung des Reflektors mit einem benachbarten Funktionsbauteil, beispielsweise einem Leuchtmittel oder einer Fahrzeugkarosserie.

Nachteilig hierbei ist, dass die Lackierung der Innenseite des Reflektors aufwändig und das Aufbringen einer Feinstruktur in die Reflexionsfläche erschwert ist.

Aus der DE 20 38 775 A1 ist ein Reflektor für eine Beleuchtungsvorrichtung eines Kraftfahrzeugs bekannt, der zum einen einen metallischen Grundkörper und zum anderen ein Spritzgießelement aufweist. Zur Bildung des Spritzgießelementes wird eine thermoplastische Kunststoffmasse in einen Zwischenraum zwischen einer inneren Seite des Grundkörpers und einer Wandung eines Formwerkzeugs gebracht, so dass eine haftende Kunststoffauskleidung erzeugt wird, die mit einem reflektierenden Überzug beschichtet werden kann.

Aus der DE 198 11 055 A1 ist ein Reflektor für eine Beleuchtungsvorrichtung bekannt, der einen Grundkörper aus einem Kunststoffmaterial und eine außenseitig auf dem Grundkörper aufgebrachte Einlage aus einem Metallmaterial aufweist.

Aus der DE 10 2006 051 774 A1 sind Fittings für den Anschluss von Rohren bekannt, die beispielsweise bei Wasserleitungen eingesetzt werden. Ein Metalleinsatzelement des Fittings ist vollumfänglich mit einer Kunststoffummantelung versehen.

Aus der US 2007/023961 A1 ist eine Taucherbrille bekannt, bei der ein Rahmeneinsatz zur Aufnahme von Gläsern von einer Seite her mit einem Aufsatzteil verbunden ist. Die Verbindung dieser beiden aus einem Kunststoffmaterial bestehenden Teile erfolgt durch Anspritzen des Ansatzteils auf die Vorderseite des Rahmens, wobei lediglich Stege in entsprechende Aussparungen des Rahmens gebildet werden.

Aufgabe der Erfindung ist es daher, einen Reflektor für eine Beleuchtungsvorrichtung eines Kraftfahrzeugs derart weiterzubilden, dass die Reflexionsfläche kostengünstig herstellbar ist und die Oberflächengüte der Reflexionsfläche verbessert wird, wobei die Festlegung des Spritzgießelementes auf dem metallischen Grundkörper verbessert ist.

Zur Lösung dieser Aufgabe weist die Erfindung die Merkmale des Patentanspruchs 1 auf.

Der besondere Vorteil der Erfindung besteht darin, dass der Reflektor durch ein aus zwei Materialkomponenten bestehendes Bauteil gebildet ist. Der metallische Grundkörper trägt die Reflektorfläche und gibt dem Reflektor Stabilität. Er kann gleichzeitig als ein Kühlkörper zur Wärmeabfuhr und/oder der Abschirmung elektromagnetischer Strahlung dienen. Da die Reflexionsfläche des Reflektors nicht durch den metallischen Grundkörper selbst, sondern durch das auf diesen aufgebrachte Spritzgießelement gebildet ist, sind die Anforderungen an die Formtoleranzen des metallischen Grundkörpers geringer als bei den aus dem Stand der Technik bekannten Lösungen. Aus diesem Grund kann der metallische Grundkörper besonders kostengünstig gefertigt werden. Vorteilhaft kann die durch das aufgebrachte Spritzgießelement gebildete Reflexionsfläche unabhängig von der Formgebung des topfförmigen Grundkörpers ausgeformt werden, so dass eine optimale Gestaltung der Reflexionsfläche möglich wird. Beispielsweise kann die Reflexionsfläche partiell und gezielt mit einer Feinstruktur versehen werden, die die lichttechnischen Eigenschaften des Reflektors verbessert. Vorteilhaft ist die Ausbildung des Spritzgießelementes bzw. die Art der Anbindung desselben an den Reflektor nicht abhängig von den Randbedingungen und Limitierungen des Herstellungsprozesses des metallischen Grundkörpers, so dass die Reflexionsfläche ohne Berücksichtigung der verfahrenstechnischen Grenzen eines Blechumformverfahrens bzw. eines Metalldruckgussverfahrens realisiert werden kann. Weiterhin kann auf das Aufbringen einer die aufgedampfte Reflexionsfläche tragenden Lackierung verzichtet werden, wenn bereits der im Spritzgießverfahren aufgebrachte Kunststoffkörper eine hinreichend glatte Oberfläche aufweist. Nach der Erfindung kann der metallische Grundkörper zur Bildung des Festlegungsbereiches eine Aussparung aufweisen. Mittels Durchspritzen der Aussparung und Anspritzen an einen der Außenseite des metallischen Grundkörpers zugeordneten Aussparungsrandabschnitt ist das Spritzgießelement lagefest mit dem Grundkörper verbindbar. Die Aussparung bildet einen definierten Festlegungsbereich, der mit Spritzgießmaterial durchspritzbar ist zur Festlegung des Spritzgießelementes auf dem metallischen Grundkörper. Die Aussparung kann hierbei vorteilhaft während der Formgebung des Grundkörpers in diesen eingebracht werden.

Nach einer bevorzugten Ausführungsform der Erfindung weist der metallische Grundkörper einen Festlegungsbereich auf, der einem in einem Fassungsbereich von einer Außenseite des metallischen Grundkörpers abragenden Halsring zugeordnet ist. Das Spritzgießelement wird durch Hinterspritzen an dem Halsring lagefest mit dem metallischen Grundkörper verbunden. Vorteilhaft wird auf diese Weise ein definierter Verbindungsbereich gebildet, an dem das aufgebrachte Spritzgießelement lagefest mit dem Grundkörper verbunden ist. Hierbei kann der an dem Halsring angeordnete Festlegungsbereich während des Formgebungsprozesses des Basiskörpers in einem gemeinsamen Arbeitsschritt ausgebildet werden.

Nach einer Weiterbildung der Erfindung kann ein Festlegungsbereich in dem metallischen Grundkörper durch eine lokale Ausbeulung gebildet sein, wobei das aufgebrachte Spritzgießelement mittels Ausspritzen der Ausbeulung lagefest mit dem metallischen Grundkörper verbunden ist. Die lokale Ausbeulung kann in dem Spritzgießwerkzeug durch einen hohen Spritzdruck beim Anspritzen des Spritzgießelementes auf die Innenseite des Grundkörpers ausbildbar sein. Vorteilhaft wird durch das Vorsehen einer lokalen Ausbeulung zur Bildung eines Festlegungsbereichs ein definierter Verbindungsbereich gebildet, an dem Kunststoffmaterial zur Bildung des Spritzgießelementes anspritzbar ist. Sofern die lokale Ausbeulung während des Anspritzens des Spritzgießmaterials auf die Innenseite des Grundkörpers ausbildbar ist, ist der Festlegungsbereich vorteilhaft in einem gemeinsamen Arbeitsschritt mit dem Spritzgießen des Spritzgießelementes ausbildbar.

Nach einer Weiterbildung der Erfindung ist ein Ausformungsabschnitt des Spritzgießelementes als ein Anbindungsabschnitt zur Verbindung des Reflektors mit einem weiteren Funktionsbauteil ausgebildet. Vorteilhaft ist hierdurch unabhängig von der Formgebung des topfförmigen Grundkörpers des Reflektors ein Anbindungsabschnitt an den Grundkörper anformbar, so dass eine optimale Befestigung bzw. Lagerung des Reflektors in einem Leuchtengehäuse oder an einem Teil einer Fahrzeugkarosserie gewährleistet ist. Ebenso kann der Anbindungsabschnitt derart ausgeformt sein, dass ein Leuchtmittel positionsgenau mit dem Reflektor verbindbar ist. Die Formgebung der Anbindungsabschnitte kann variabel gestaltet sein und Rücksicht auf die Bauraumbeschränkungen nehmen. Vorteilhaft kann der Reflektor hierdurch Platz sparend in einer Fahrzeugleuchte angeordnet sein.

Nach einer Weiterbildung der Erfindung ist in einem Fassungsbereich des Grundkörpers ein metallischer Halter für Leuchtmittel unter Umgreifen des Anbindungselementes derart vorgesehen, dass eine EMV-Kontaktierung und eine EMV-Schirmung des Fassungsabschnitts gegeben sind. Vorteilhaft kann durch den EMV-Schutz des Fassungsabschnitts beispielswese eine Xenon-Lichtquelle ohne weitere diesbezügliche Schutzmaßnahmen betrieben werden.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:

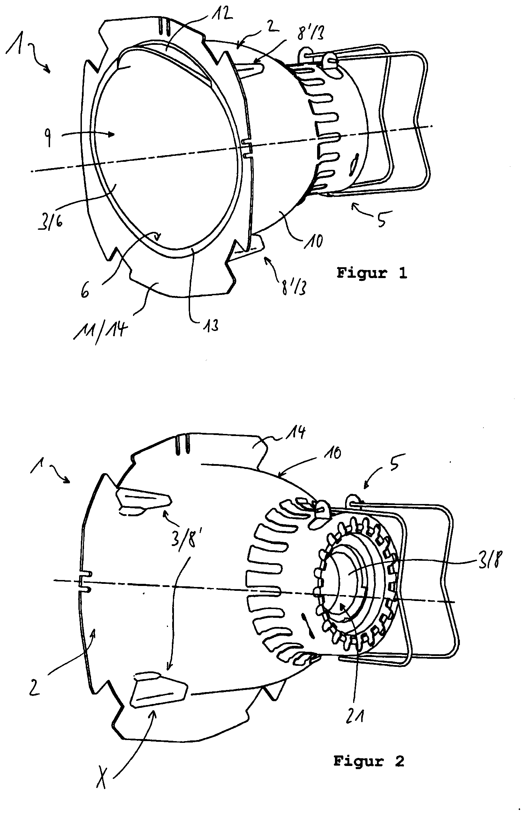

- Fig. 1: eine perspektivische Vorderansicht eines Reflektors,
- Fig. 2: eine perspektivische Rückansicht des Reflektors gemäß Figur 1,

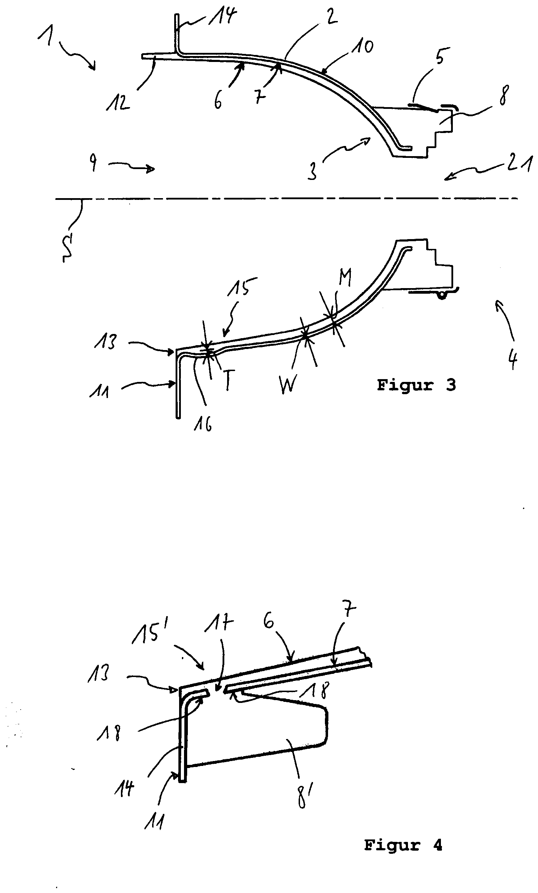

- Fig. 3: einen Vertikalschnitt durch den Reflektor gemäß Figur 1,
- Fig. 4: eine vergrößerte Schnittdarstellung eines Anbindungsabschnitts X des Reflektors gemäß Figur 1,
- Fig. 5: einen Vertikalschnitt durch einen Reflektor nach einem zweiten Ausführungsbeispiel und
- Fig. 6: einen Vertikalschnitt durch einen Reflektor nach einem dritten Ausführungsbeispiel.

Ein Reflektor 1 einer Beleuchtungsvorrichtung für ein Kraftfahrzeug besteht im Wesentlichen aus einem topfförmigen Grundkörper 2, aus einem auf den topfförmigen Grundkörper 2 aufgebrachten Spritzgießelement 3 und aus einem dem Grundkörper 2 in einem Fassungsbereich 4 desselben zugeordneten Halter für Leuchtmittel 5. Das Spritzgießelement 3 bildet eine Reflexionsfläche 6, die auf einer Innenseite 7 des Grundkörpers 2 flächig aufgebracht ist. Die Beleuchtungsvorrichtung kann als ein Scheinwerfer oder als eine Signalleuchte ausgebildet sein.

Das Spritzgießelement 3 weist neben der Reflexionsfläche 6 weitere Ausformungsabschnitte auf, die als Anbindungsabschnitte 8, 8' zur Verbindung des Reflektors 1 mit weiteren nicht dargestellten Funktionsbauteilen ausgebildet sind. Im Fassungsbereich 4 des Reflektors 1 ist der Anbindungsabschnitt 8 unter Bildung einer Öffnung 21 derart ausgeformt, dass eine nicht dargestellte Lichtquelle positionsgenau und koaxial zu dem Grundkörper 2 in dem Reflektor 1 eingesetzt und gehalten werden kann.

In einem sich an einer vorderen großen Öffnung 9 des Reflektors 1 anschließenden Bereich der Außenseite 10 des Grundkörpers 2 sind die Anbindungsabschnitte 8' derart ausgebildet, dass der Reflektor 1 an einem nicht dargestellten Funktionsbauteil der Beleuchtungsvorrichtung oder an einem Trägerteil der Fahrzeugkarosserie befestigt werden kann. Die Anbindungsabschnitte 8' ragen hierbei von einem einen vorderen Rand 11 des metallischen Grundkörpers 2 bildenden und von demselben radial abragenden Flansch 14 nach hinten ab.

Der Grundkörper 2 kann beispielsweise aus einem Blechmaterial (Stahlblech, Blech mit aufgerauter Oberfläche, gelochtes Blech, Gitterblech) bzw. einem Streckmetall mit einer Mehrzahl von Löchern/Durchbrüchen oder einem anderen Metallwerkstoff gebildet sein. Das Spritzgießelement 3 kann aus einem thermoplastischen oder duroplastischen Kunststoffmaterial bestehen. Der metallische Grundkörper und das aufgebrachte Spritzgießelement können einen ähnlichen Wärmeausdehnungskoeffizienten aufweisen, beispielsweise durch die Werkstoffpaarung Aluminium/Polyphenylensulfid (PPS) bzw. Stahl/Bulk Molding Componend (BMC, faserverstärkter Kunststoff).

Die durch das Spritzgießelement 3 gebildete Reflexionsfläche 6 folgt im Wesentlichen der topfförmigen Kontur des metallischen Grundkörpers 2 und ist flächig auf der Innenseite 7 des Grundkörpers 2 verbunden. Die Reflexionsfläche 6 weist eine radiale Mächtigkeit M auf, die der 0,5 bis 5-fachen Wandstärke W des topfförmigen Grundkörpers 2 entspricht. Die Reflexionsfläche 6 kann nach dem Spritzgießen glatt ausgeführt sein, so dass auf eine Grundlackierung vor dem Bedampfen verzichtet werden kann. Ebenfalls kann die Reflexionsfläche 6 partiell und gezielt mit einer Feinstruktur versehen sein, durch die die optischen Eigenschaften des Reflektors 1 besonders günstig ausgebildet sind.

In einem bezogen auf die Einbaulage des Reflektors 1 oberen Bereich weist das Spritzgießelement 3 einen von der Reflexionsfläche 6 abragenden Überstand 12 auf derart, dass das Spritzgießelement 3 über den vorderen Rand 11 des metallischen Grundkörpers 2 hinausragt. Ein die Reflexionsfläche 6 begrenzender und sich beidseits an den Überstand 12 anschließender vorderer Randabschnitt 13 des Spritzgießelements 3 schließt bündig mit dem den vorderen Rand 11 bildenden Flansch 14 des Grundkörpers 2 ab.

In einem bezogen auf die Einbaulage des Reflektors 1 unteren, dem vorderen Rand 11 nahen Festlegungsbereichs 15 ist der metallische Grundkörper 2 mit einer lokalen Ausbeulung 16 versehen. Durch das Einbringen von Spritzgießmaterial in die lokale Ausbeulung 16 ist das Spritzgießelement 3 lagefest mit dem metallischen Grundkörper 2 verbunden. Aufgrund der Tiefe T der lokalen Ausbeulung 16 ist das Spritzgießelement 3 sowohl gegen ein Verdrehen um eine lichttechnische Symmetrieachse S als auch gegen ein Herausgleiten durch die vordere große Öffnung 9 des Reflektors 1 gesichert.

Im Anbindungsbereich 8' ist ein Festlegebereich 15' durch das Vorsehen einer Aussparung 17 in dem metallischen Grundkörper 2 gebildet. Zur Festlegung des Spritzgießelements 3 in Bezug auf den metallischen Grundkörper 2 sowie zur Ausbildung des Anbindungsabschnitts 8' wird die Aussparung 17 mit Spritzgießmaterial durchspritzt. Gleichzeitig wird an die Außenseite 10 des metallischen Grundkörpers 2 Spritzgießmaterial im Bereich des der Aussparung 17 zugeordneten Aussparungsrandabschnitts 18 angespritzt. Hierdurch ist das Spritzgießelement 3 sowohl gegen ein Verdrehen als auch gegen ein Herausgleiten gesichert.

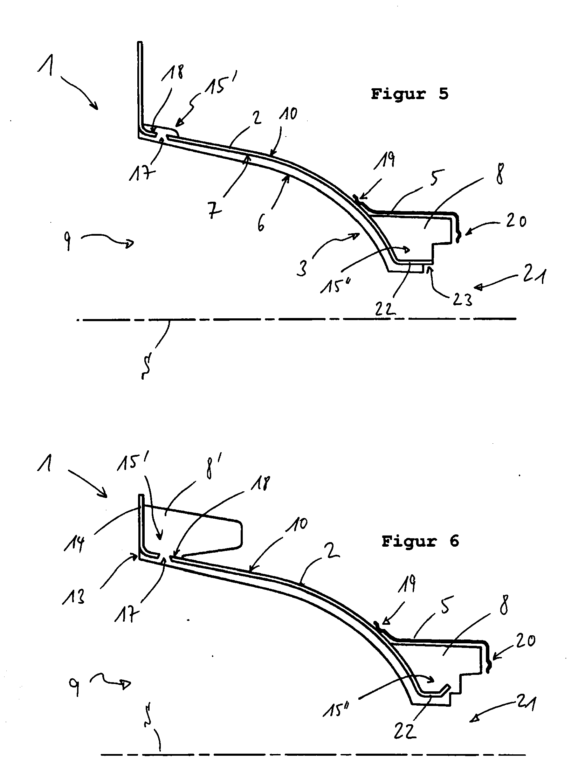

Nach einer alternativen Ausführungsform des Reflektors 1 gemäß Figur 5 wird die Aussparung 17 durchspritzt und das Spritzgießelement 3 an den äußeren Aussparungsrandabschnitt 18 angespritzt. Auf die Ausbildung eines Anbindungsabschnitts an dem der Aussparung 17 zugeordneten Außenseite 10 des Reflektors 1 wird hierbei jedoch verzichtet.

Im Fassungsbereich 4 ist der Anbindungsabschnitt 8 von einem beispielsweise aus einem Blechmaterial bestehenden Halter für Leuchtmittel 5 umfasst. Der abnehmbar gestaltete Halter für Leuchtmittel 5 liegt mit einem äußeren Randabschnitt 19 auf der Außenseite 10 des metallischen Grundkörpers 2 an, so dass der metallische Grundkörper 2 und der Halter für Leuchten 5 elektrisch leitend verbunden sind. Ein innerer Randabschnitt 20 des Halters für Leuchten 5 ist derart ausgebildet, dass eine Öffnung 21 zum Einsetzen und/oder Kontaktieren eines nicht dargestellten Leuchtmittels in den für die Aufnahme derselben vorgesehenen Anbindungsabschnitt 8 gebildet ist.

Zur elektrisch leitenden Verbindung des nicht dargestellten Leuchtmittels mit dem metallischen Grundkörper 2 ist der metallische Grundkörper 2 im Fassungsbereich 4 nur teilweise vom Spritzgießelement 3 umgeben. Auf diese Weise ist eine Durchführung 23 gebildet zur EMV-Kontaktierung bzw. EMV-Schirmung des metallischen Grundkörpers 2, des Halters für Leuchten 5 und der nicht dargestellten Lichtquelle.

Nach einer alternativen Ausführungsform gemäß Figur 6 weist der metallische Grundkörper 2 eine Aussparung 17 auf, an die sich auf der Außenseite des metallischen Grundkörpers 2 ein Anbindungsabschnitt 8' anschließt. Im Fassungsbereich 4 ist in bekannter Weise ein von dem Halter für Leuchten 5 umgebener Anbindungsabschnitt zur Aufnahme eines nicht dargestellten Leuchtmittels ausgebildet. An den metallischen Grundkörper 2 schließt sich hierbei zur Bildung eines Festlegungsbereichs 15" im Fassungsbereich 4 ein koaxial zum Grundkörper 2 und nach Art eines Bumerangs gebogender Halsring 22 an, der von dem Grundkörper 2 in Bezug auf die lichttechnische Symmetrieachse S im Wesentlichen axial nach hinten abragt. Der Halsring 22 ist hierbei ebenso wie die Innenseite 7 und ein dem Fassungsbereich 4 zugeordneter Teil der Außenseite 10 des Grundkörpers 2 vom Spritzgießelement 3 umgeben. Hierdurch wird zur lagefesten Verbindung von metallischem Grundkörper 2 und Spritzgießelement 3 ein Hinterschnitt ausgebildet und eine relativ große Oberflächenanbindung des Spritzgießelements 3 an Grundkörper 2 im Bereich des Festlegungsabschnitts 15" bewirkt.

Zum Anspritzen des Spritzgießelements 3 wird der aus einem Metallmaterial hergestellte Grundkörper 2 in einem Formraum eines Spritzgießwerkzeugs eingelegt und in Bezug auf das Spritzgießwerkzeug ausgerichtet. In einem einzigen Arbeitsschritt wird Spritzgießmaterial dem Formraum zugeführt unter Bildung der Reflexionsfläche 6 an der Innenseite 4 des metallischen Grundkörpers 2, unter Ausspritzen der lokalen Ausbeulung 16, unter Durchspritzen der Aussparung 17 und unter Ausformung der Anbindungsabschnitte 8, 8'. Bei der Ausformung der Anbindungselemente 8, 8' wird der äußere Aussparungsrandabschnitt 18 angespritzt und der Halsring 22 im Fassungsbereich 4 hinterspritzt. Um ein bedarfsgerechtes Auftragen des Spritzgießmaterials zu gewährleisten, können eine oder mehrere Düsen dem Spritzgießwerkzeug zugeordnet werden. Durch Werkzeugschieber kann die Formgebung der Anbindungsabschnitte 8, 8' vorgegeben sein.

Während des Spritzgießens kann der metallische Grundkörper 2 durch den Einspritzdruck des Spritzgießmaterials gerichtet bzw. kalibriert werden. Ebenso kann der metallische Grundkörper 2 in definierter Weise aufgeblasen, das heißt vergrößert werden, um einen Ausgleich der Schwindungsdifferenzen zwischen dem Grundkörper 2 und dem eingespritzten Kunststoffmaterial zu bewirken. Hierbei kann der metallische Grundkörper 2 mit dem Einspritzdruck des Spritzgießmaterials derart beaufschlagt werden, dass er gegen die Wandung des Spritzgießwerkzeugs gedrückt wird.

Die lokale Ausbeulung 16 kann bereits beim Formen des metallischen Grundkörpers in denselben eingebracht werden. Alternativ kann die lokale Ausbeulung 16 während des Spritzgießens ausgeformt werden, indem das Spritzgießmaterial mit einem hohen Druck auf den metallischen Grundkörper 2 aufgespritzt wird und das Werkzeug im Bereich der dem Festlegungsbereich 15 zugeordneten Außenseite 10 des Grundkörpers 2 eine der Außengeometrie der Ausbeulung 16 entsprechende Vertiefung ausweist.

Nachdem der Grundkörper 2 und das Spritzgießelement 3 durch Spritzgießen lagefest miteinander verbunden sind, kann der Reflektor 1 aus dem Werkzeug entnommen werden. Die Reflexionsfläche 6 des Reflektors 1 kann nunmehr mit einem spiegelnden Überzug versehen werden, der beispielsweise mittels Bedampfung auf demselben aufgebracht wird.

Alternativ kann vorgesehen sein, dass vor dem Bedampfen der Reflexionsfläche 6 ein Lack auf dieselbe aufgebracht wird, um eine besonders glatt ausgebildete Oberfläche derselben zu erreichen.

Das Spritzgießwerkzeug kann Wechseleinsätze zur Anspritzung unterschiedlich geformter, der Aufnahme verschiedener Lampenfassungen dienender Anbindungsabschnitte 8 aufweisen. Auf diese Weise kann allein durch Wechsel des Wechseleinsatzes ein Reflektor 1 geschaffen werden, der unterschiedliche Lampenfassungen aufnehmen kann.

Ferner kann während des Spritzgießens eine Feinstruktur auf die Reflexionsfläche 4 aufgebracht werden. Auf diese Weise können die lichttechnischen Eigenschaften des Reflektors verbessert werden.

Nach einer nicht dargestellten Ausführungsform der Erfindung kann der Grundkörper 2 auch aus mehreren metallischen Grundkörperteilen gebildet sein, wobei die Grundkörperteile in den Festlegungsbereichen 15, 15', 15" durch die angespritzten Anbindungselemente 8, 8' zueinander fixiert sind.

Alternativ kann der Grundkörper 2 auch mehrteilig ausgebildet sein, wobei wärmetechnisch stärker beanspruchte Grundkörperteile aus einem Metallmaterial und weniger wärmetechnisch beanspruchte Grundkörperteile aus einem duroplastischen oder thermoplastischen Kunststoff gebildet sein können.

Selbstverständlich kann der Reflektor auch für andere Leuchten als Kraftfahrzeugleuchten eingesetzt werden.

Nach einer nicht dargestellten Ausführungsform der Erfindung kann die Erzeugung unterschiedlicher Eigenschaften des Spritzgießelements über die Verwendung von mindestens zwei unterschiedlichen Kunststoffen bewirkt werden. Beispielsweise können Kunststoffmaterialien geschichtet aufgeschmolzen werden und anschließend nacheinander in den Formraum des Spritzgießwerkzeugs eingespritzt werden. Die Kunststoffmaterialien können zeitlich und/oder räumlich versetzt in den Formraum eingespritzt werden. Auch ist es möglich, die Kunststoffmaterialien mit unterschiedlichem Spritzdruck einzuspritzen.

**Bezugszeichenliste**

| | | | |
|---|---|---|---|
| 1 | Reflektor | M | Mächtigkeit |
| 2 | Grundkörper | W | Wandstärke |
| 3 | Spritzgießelement | T | Tiefe |
| 4 | Fassungsbereich | S | Symmetrieachse |
| 5 | Halter für Leuchtmittel | | |
| 6 | Reflexionsfläche | | |
| 7 | Innenseite des Grundkörpers | | |
| 8, 8' | Anbindungsabschnitt | | |
| 9 | vordere große Öffnung | | |
| 10 | Außenseite | | |
| 11 | vorderer Rand | | |
| 12 | Überstand | | |
| 13 | vorderer Randabschnitt | | |
| 14 | Flansch | | |
| 15, 15', | Festlegungsbereich | | |
| 15" | | | |
| 16 | lokale Ausbeulung | | |
| 17 | Aussparung | | |
| 18 | Aussparungsrandabschnitt | | |
| 19 | äußerer Randabschnitt | | |
| 20 | innerer Randabschnitt | | |
| 21 | Öffnung | | |
| 22 | Halsring | | |
| 23 | Durchführung | | |

## Patentansprüche

1. Reflektor für eine Beleuchtungsvorrichtung eines Kraftfahrzeugs mit einer Reflexionsfläche (6) und mit einem die Reflexionsfläche (6) tragenden topfförmigen metallischen Grundkörper (2), wobei die Reflexionsfläche (6) auf einer Innenseite (7) des Grundkörpers (2) aufgebracht ist, dass zumindest die Reflexionsfläche (6) des Reflektors (1) durch ein auf den metallischen Grundkörper (2) des Reflektors (1) aufgebrachtes Spritzgießelement (3) aus Kunststoffmaterial gebildet ist und dass der metallische Grundkörper (2) derart geformt ist, dass das aufgebrachte Spritzgießelement (3) lagefest mit dem metallischen Grundkörper (2) verbunden ist, **dadurch gekennzeichnet, dass** der metallische Grundkörper (2) eine Aussparung (17) aufweist zur Bildung eines Festlegungsbereichs (15') derart, dass das Spritzgießelement (3) mittels Durchspritzen der Aussparung (17) einerseits und Anspritzen an einen der Außenseite (10) des metallischen Grundkörpers (2) zugeordneten Aussparungsrandabschnitts (18) andererseits verbindbar ist.

2. Reflektor nach Anspruch 1, **dadurch gekennzeichnet, dass** von einer Außenseite (10) des metallischen Grundkörpers (2) ein Halsring (22) abragt, an dem ein Festlegungsbereich (15") derart angeordnet ist, dass das Spritzgießelement (3) durch Hinterspritzen an dem Halsring (22) befestigbar ist.

3. Reflektor nach Anspruch 1 oder 2, **dadurch gekennzeichnet, dass** der metallische Grundkörper (2) eine lokale Ausbeulung (16) aufweist zur Bildung eines
Festlegungsbereichs (15) derart, dass das aufgebrachte Spritzgießelement (3) mittels Ausspritzen der Ausbeulung (16) lagefest mit dem metallischen Grundkörper (2) verbunden ist.

4. Reflektor nach Anspruch 3, **dadurch gekennzeichnet, dass** die lokale Ausbeulung (16) in einem Spritzgießwerkzeug durch einen hohen Spritzdruck beim Anspritzen des Spritzgießelementes (3) auf die Innenseite (7) des Grundkörpers (2) ausbildbar ist.

5. Reflektor nach einem der Ansprüche 1 bis 4, **dadurch gekennzeichnet, dass** ein Ausformungsabschnitt des Spritzgießelementes (3) als ein Anbindungsabschnitt (8, 8') zur Verbindung des Reflektors (1) mit einem weiteren Funktionsbauteil ausgebildet ist.

6. Reflektor nach Anspruch 5, **dadurch gekennzeichnet, dass** der Anbindungsabschnitt (8, 8') zumindest bereichsweise der Außenseite (10) des metallischen Grundkörpers zugeordnet ist.

7. Reflektor nach Anspruch 5 oder 6, **dadurch gekennzeichnet, dass** der Anbindungsabschnitt (8) in einem Fassungsbereich (4) des metallischen Grundkörpers (2) denselben nur teilweise umgibt derart, dass eine metallisch leitende Durchführung (23) zur EMV-Kontaktierung und/oder zur EMV-Schirmung des metallischen Grundkörpers (2) ausgeführt ist.

8. Reflektor nach einem der Ansprüche 1 bis 7, **dadurch gekennzeichnet, dass** in dem Fassungsbereich (4) des Grundkörpers (2) ein metallischer Halter für Leuchtmittel (5) unter Umgreifen des Anbindungsabschnitts (8, 8') aufgebracht ist derart, dass eine EMV-Kontaktierung und/oder eine EMV-Schirmung des Fassungsabschnitts (4) gegeben ist.

## Claims

1. Reflector for an illuminating device of a vehicle with a reflection surface (6) and with a bowl-shaped metallic base body (2) supporting the reflection surface (6), where the reflection surface (6) is positioned on one inner surface (7) of the base body (2) so that at least the reflection surface (6) of the reflector (1) is formed by an injection-molded element (3) made of plastic material applied to the metallic base body (2) of the reflector (1) and so that the base body (2) in formed in such a way that the applied injection-molded element (3) is connected in fixed position to the metallic base body (2), **characterized in that** the metallic base body (2) features a recess (17) to form a fixing area (15') in such a way that the injection-molded element (3) can be connected by means of firstly injecting through the recess (17) and secondly injection molding to an edge section of the recess (18) allocated to the outside surface (10) of the metallic base body (2).

2. Reflector in accordance with Claim 1, **characterized in that** a neck ring (22) protrudes from an outside surface (10) of the metallic base body (2), on which neck ring a fixing area (15") is arranged in such a way that the injection-molded element (3) can be fastened to the neck ring (22) by means of back injection.

3. Reflector in accordance with Claim 1 or 2, **characterized in that** the metallic base body (2) features a local bulge (16) for forming a fixing area (15) in such a way that the applied injection-molded element (3) is connected in a fixed position to the metallic base body (2) by means of injecting molding material into the bulge (16).

4. Reflector in accordance with Claim 3, **characterized in that** the local bulge (16) can be formed in an injection molding tool by means of high injection pressure when injection molding on the injection-molded element (3) on the inner surface (7) of the base body (2).

5. Reflector in accordance with one of Claims 1 through 4, **characterized in that** a formation section of the injection-molded element (3) takes the form of a connecting section (8, 8') to connect the reflector (1) with a further functional component.

6. Reflector in accordance with Claim 5, **characterized in that** the connecting section (8, 8') is allocated to the external surface (10) of the metallic base body at least in some areas.

7. Reflector in accordance with Claim 5 or 6, **characterized in that** the connecting section (8) only partially surrounds the metallic base body (2) in a holder area (4) of the metallic base body (2) in such a way that a metallic conductive feedthrough (23) is implemented for EMC contacting and/or EMC shielding of the metallic base body (2).

8. Reflector in accordance with one of Claims 1 through 7, **characterized in that** a metallic holder for light sources (5) is located in the holder area (4) of the base body (2), encompassing the connecting section (8, 8'), in such a way that EMC contacting and/or EMC shielding of the holder area (4) is provided.

## Revendications

1. Réflecteur pour un dispositif d'éclairage d'un véhicule avec une surface de réflexion (6) et avec un corps de base métallique (2) en forme de pot portant la surface de réflexion (6), ladite surface de réflexion (6) étant appliquée sur une face intérieure (7) du corps de base (2), **caractérisé en ce qu'**au moins la surface de réflexion (6) du réflecteur (1) est constituée d'un élément moulé par injection (3) en matière plastique monté sur le corps de base métallique (2) du réflecteur (1) et que le corps de base métallique (2) est formé de sorte que l'élément moulé par injection (3) monté est connecté de manière fixe avec le corps de base métallique (2), **caractérisé en ce que** le corps de base métallique (2) présente un évidement (17) de façon à former une zone de fixation (15'), de sorte que l'élément moulé par injection (3) peut être connecté d'une part au moyen d'une injection de l'évidement (17) et d'autre part, au moyen d'une injection au niveau de la section de bordure d'évidement (18) rattachée à la face extérieure (10) du corps de base métallique (2).

2. Réflecteur selon la revendication 1, **caractérisé en ce qu'**une bague à collerette (22) dépasse d'une face extérieure (10) du corps de base métallique (2), une zone de fixation (15") étant disposée sur la bague à collerette (22) de sorte que l'élément moulé par injection (3) peut être fixé par une injection arrière sur la bague à collerette (22).

3. Réflecteur selon l'une quelconque des revendications 1 ou 2, **caractérisé en ce que** le corps de base métallique (2) présente une protubérance locale (16) de façon à former une zone de fixation (15), de sorte que l'élément moulé par injection (3) monté est connecté de manière fixe avec le corps de base métallique (2) au moyen de l'éjection de la protubérance (16).

4. Réflecteur selon la revendication 3, **caractérisé en ce que** la protubérance locale (16) peut être formée dans un moule d'injection par une pression d'injection élevée lors de l'injection de l'élément moulé par injection (3) sur la face intérieure (7) du corps de base (2).

5. Réflecteur selon l'une quelconque des revendications 1 à 4, **caractérisé en ce qu'**une section de moulage de l'élément moulé par injection (3), en tant que section de connexion (8, 8') pour la connexion du réflecteur (1), est constituée d'un composant fonctionnel supplémentaire.

6. Réflecteur selon la revendication 5, **caractérisé en ce que** la section de connexion (8, 8') est associée au moins partiellement à la face extérieure (10) du corps de base métallique.

7. Réflecteur selon l'une quelconque des revendications 5 ou 6, **caractérisé en ce que** la section de connexion (8) n'entoure que partiellement le corps de base métallique (2) dans une zone de douille (4) du corps de base métallique (2), de sorte qu'une traversée conductrice métallique (23) est réalisée pour le contact CEM et/ou pour le blindage CEM du corps de base métallique (2).

8. Réflecteur selon l'une quelconque des revendications 1 à 7, **caractérisé en ce que** dans la zone de douille (4) du corps de base (2), un support métallique pour ampoule (5) est monté enserrant la section de connexion (8, 8'), de façon à disposer d'un contact CEM et/ou un blindage CEM de la zone de douille (4).
